# EUROPEAN PATENT SPECIFICATION

(11) **EP 3 762 322 B1**
(45) Date of publication and mention of the grant of the patent: **12.07.2023**
(21) Application number: 19719940.9
(22) Date of filing: 08.03.2019
(51) Int. Cl.: B66C 13/28, B66C 23/52

(54) **PEDESTAL MOUNTED CRANE WITH FLYWHEEL ENERGY STORAGE**
SOCKELMONTIERTER KRAN MIT SCHWUNGRAD-ENERGIESPEICHER
GRUE MONTÉE SUR SOCLE DOTÉE D'UN STOCKAGE D'ÉNERGIE À VOLANT D'INERTIE

(30) Priority: 08.03.2018 NL 2020553
(43) Date of publication of application: 13.01.2021
(73) Proprietor: Itrec B.V., 3115 HH Schiedam (NL)
(72) Inventor: ROODENBURG, Joop, 3115 HH Schiedam (NL); VAN VELUW, Cornelis Martinus, 3115 HH Schiedam (NL); BRINKMAN, Marc Louis, 3115 HH Schiedam (NL)
(74) Representative: EP&C
(86) International application number: PCT/NL2019/050152
(87) International publication number: WO 2019/172765

(56) References cited:
- WO-A1-2008/037004
- WO-A1-2008/059884
- WO-A1-2014/025253
- DE-A1- 19 530 110

## Description

This invention relates to a pedestal mounted crane. Pedestal mounted cranes are widely in use and have various designs.

Generally a pedestal mounted crane comprises a pedestal extending between a foot thereof that is adapted to mount or mounts the pedestal to a structure, for example an offshore structure or a hull of an offshore vessel, and a head thereof. The head, often embodied as a circular flange, supports a slew bearing thereon. The slew bearing has a vertical slew axis. A revolving crane superstructure is mounted on the slew bearing, the slew bearing enabling slewing of the crane superstructure relative to the pedestal about the slew axis. The superstructure comprises a crane boom. The pedestal mounted crane further comprises a hoisting system that is configured for lifting and lowering a load. The system comprises a motor driven hoisting winch and an associated hoisting wire. One or more sheaves are configured to guide the hoisting wire, and at least one of said sheaves is mounted on the boom. The hoisting wire depends from said boom mounted sheave to a load connector of the hoisting system, e.g. a crane hook, in a single or multi-fall arrangement.

For example pedestal mounted cranes are known that have a slewable crane superstructure provided with a rigid luffable boom that can be pivoted up and down, e.g. by one or more hydraulic cylinders forming a luffing mechanism. Luffing can also be done with a luffing winch and cable, e.g. the superstructure having a gantry or mast from which the luffing cable extends to the boom. Another well-known design is a knuckle-boom crane with an articulated boom. Herein luffing is commonly done by one or more hydraulic cylinders.

Pedestal mounted cranes are for example regarded as the workhorse in the offshore industry. They are commonly found on offshore structures, like hydrocarbon production platforms, and on all sorts of offshore vessels, such as monohull or semi-submersible drilling vessels, offshore supply vessels, fishing vessel, transport vessels, etc. A pedestal crane of the kind described above is known from WO 2014 025253.

For example many rather old offshore platforms are each provided with one or more pedestal mounted cranes having a dedicated generator set with a combustion engine, e.g. a diesel engine, that drives a generator providing electrical power for the electrical motor driven hoisting winch of the crane. It is noted that in such designs the electrical motor can directly drive the winch, e.g. the winch drum, or use is made of a hydraulic transmission having a circuit wherein the electrical motor drives a hydraulic pump, and the pump provides pressurized hydraulic liquid to a hydraulic motor that drives the actual winch, e.g. the drum. These versions are commonly called an electric drive and an electro hydraulic drive of the winch. In another existing design the combustion engine, e.g. a diesel engine, drives the winch as the engine is coupled to the winch via a hydraulic transmission. This is commonly called a diesel hydraulic drive of the hoisting winch.

These, often old, diesel engines are considered a source of undue pollution, e.g. as the fluctuating power demand by operation of the crane causes significant fluctuations in the load on the diesel engine forcing it to run highly inefficient. For example a crane may be operated such that two main motions of the crane can be performed simultaneously, for example hoisting and slewing, wherein the slew drive motor may also be electrically powered. Some cranes are even designed for simultaneous hoisting, slewing, and luffing, further increasing the maximum power demand and fluctuations.

The present invention aims to provide an improved pedestal mounted crane or at least an alternative to existing pedestal mounted crane.

The present invention aims to provide a method that allows for effective, e.g. in terms of costs and/or required time, retrofitting of existing pedestal mounted cranes in order to, for example, reduce environmental effects caused by operation of the crane, and/or provide for enhanced capabilities of the crane, e.g. faster hoisting, combination of main crane motions, etc.

The present invention provides a method for retrofitting an existing pedestal mounted crane with a flywheel energy storage system, wherein the existing pedestal mounted crane comprises:
- an existing pedestal, the pedestal extending between a foot thereof that is adapted to mount or mounts the pedestal to a structure, for example an offshore structure or a hull of a vessel, and a head thereof, wherein the head is configured to mount a slew bearing thereon,
- an existing slew bearing mounted on the head of the pedestal, the slew bearing having an inner diameter and a vertical slew axis,
- an existing revolving crane superstructure, which revolving crane superstructure is mounted on the slew bearing, the slew bearing enabling slewing of the crane superstructure relative to the pedestal about the slew axis,
- an existing hoisting system configured for lifting and lowering a load, the hoisting system comprising a motor driven hoisting winch and an associated hoisting wire, as well as one or more sheaves configured to guide the hoisting wire, at least one of said sheaves being mounted on the boom and the hoisting wire depending from said sheave to a load connector of the hoisting system,
wherein the method comprises:
- providing a flywheel energy storage system comprising:
   - a flywheel having an outer diameter and a rotational axis,
   - a flywheel support structure provided with one or more bearings that support the flywheel rotatably relative to the flywheel support structure,
   - an electric motor-generator coupled to the flywheel,
- accommodating at least the flywheel and at least a part of the flywheel support structure in the pedestal, e.g. in the existing pedestal and/or in a pedestal extender that is optionally mounted on the head of the existing pedestal with the existing slew bearing being removed from said head and a slew bearing then being mounted on a head of the pedestal extender,
- providing an electrical circuit between the motor-generator of the flywheel energy storage system and an electric motor that drives the motor driven hoisting winch.

It will be appreciated that if the existing pedestal mounted crane already has an electric motor that drives the winch, it may be possible to keep this electric motor. However the retrofit may also be used to replace the electric motor for another, e.g. new, electric motor, e.g. a motor designed to operate at a different electric voltage than the existing electric motor.

It will be appreciated that if the existing pedestal mounted crane is of the type where a combustion engine acts as motor of the winch, e.g. via a hydraulic transmission, the retrofit may entail the removal of said combustion engine as the winch of the retrofitted crane is driven by an electric motor. As explained the electric motor may directly drive the winch, or a transmission, such a gear transmission or a hydraulic transmission, may be provided.

It will also be appreciated that in an embodiment the retrofit may include that the entire winch and associated motor are removed from the existing crane and replaced by a another, e.g. new, winch having an electric motor that drives the winch, e.g. rotates a winch drum.

In embodiments, the winch has a rotatable winch drum for the hoisting wire.

The crane hoisting winch may be an active heave compensated winch as is known in the field, e.g. allowing to perform offshore lifting operations.

The inventive method allows for an effective retrofitting as the flywheel and at least a part of the flywheel support structure are accommodated in the pedestal and/or in an extension of the pedestal formed by the pedestal extender. This can be done so that the flywheel and at least a part of the flywheel support structure are accommodated within the existing pedestal. However, preference is given to the provision of a pedestal extender. This pedestal extender is configured to be mounted on the head of the existing pedestal. For this purpose it is envisaged that the existing slew bearing is first removed from the head of the existing pedestal and then the pedestal extender is mounted on the head. A slew bearing, e.g. the previously removed slew bearing or a new slew bearing, is mounted on the head of the pedestal extender.

For example, as is common in the field, the head of the existing pedestal is embodied with a circular head flange. The head flange is commonly very robust and rather accurately machined in order to properly mount the slew bearing thereon. It is preferred to make use of this already present head flange to support the pedestal extender thereon and/or to mount the flywheel support structure directly to the head of the existing pedestal after removal of the slew bearing from the head. In an alternative the flywheel support structure is mounted to the pedestal extender that is mounted on the head of the existing pedestal after removal of the existing slew bearing.

It will be appreciated that the pedestal extender can be provided with a circular flange head to support the slew bearing thereon, e.g. the very slew bearing that has been removed from the existing pedestal or a new slew bearing in case the retrofit is also used to replace the existing slew bearing.

For example, the foot of the pedestal extender is embodied as a circular flange adapted to be placed on top of the head of the existing pedestal.

For example both the head of the existing pedestal and the foot of the pedestal extender ae embodied as circular flanges, e.g. with bolt holes allowing for the securing of the pedestal extender onto the existing pedestal by means of bolts passing through aligned holes in the flanges.

In an embodiment the pedestal extender has an annular main body with a circular flange on the lower end thereof, said circular flange forming the foot of the extender, and with a circular flange on the upper end thereof, said circular flange forming the head of the extender.

For example the annular main body of the pedestal extender has a cylindrical cross-section.

For example the pedestal extender is a rigid steel component.

In an embodiment the method comprises:
- dismounting the existing slew bearing from the head of the existing pedestal, e.g. including the step of lifting the crane superstructure relative to the existing pedestal,
- arranging the pedestal extender on the head of the existing pedestal,
- mounting a slew bearing on a head of the pedestal extender, e.g. said dismounted existing slew bearing or a new slew bearing,
- accommodating at least the flywheel and at least a part of the flywheel support structure in the existing pedestal and/or in a pedestal extender,
- mounting the crane superstructure on the slew bearing.

It will be appreciated that, for example, the step of mounting the slew bearing on the pedestal extender can be done at will before or after the step of arranging the pedestal extender on the existing pedestal. Preferably the slew bearing is pre-mounted on the pedestal extender, e.g. allowing this to be done in a workshop.

In an embodiment the flywheel support structure is mounted directly to the head of the existing pedestal, preferably after removal of the slew bearing from said head. In this manner the weight and loads of the flywheel and support structure are transmitted directly to the head of the existing pedestal, for example, as preferred, the flywheel support structure being solely supported from said head so that the entire weight and loads are transmitted to said head of the existing pedestal.

In an embodiment the flywheel support structure that supports the flywheel is mounted to the pedestal extender, wherein the pedestal extender is mounted on the head of the existing pedestal after removal of the existing slew bearing. In this embodiment the weight and loads of the flywheel and support structure are transmitted via a portion of the pedestal extender to the head of the existing pedestal. Preferably the flywheel support structure is solely mechanically mounted to the pedestal support, so that the entire weight and loads are transmitted to via the pedestal extender to the head of the existing pedestal.

In an embodiment the method comprises:
- dismounting the existing slew bearing from the head of the existing pedestal, e.g. including the step of lifting the crane superstructure relative to the existing pedestal,
- arranging a pedestal extender with a foot thereof on the head of the existing pedestal, so that the foot of the pedestal extender is supported by the head of the existing pedestal,
- mounting a slew bearing on a head of the pedestal extender, e.g. said dismounted existing slew bearing or a new slew bearing,
- accommodating at least the flywheel and the flywheel support structure within the pedestal extender,
- mounting the crane superstructure on the slew bearing.

In this embodiment it is envisaged that the flywheel and the flywheel support structure are fully accommodated in the pedestal extender, so that these components do not stick out above and below the pedestal extender. This facilitates the handling of the pedestal extender, in particular when the flywheel and support structure are pre-assembled with the pedestal extender. It also facilitates the integration of the system in the existing pedestal mounted crane.

In an embodiment the method comprises:
- assembly of the pedestal extender and at least the flywheel and the flywheel support structure into a subassembly,
- dismounting the existing slew bearing from the head of the existing pedestal,
- mounting a slew bearing on the head of the pedestal extender, e.g. said dismounted existing slew bearing or a new slew bearing,
- arranging the subassembly on the existing pedestal, so that the pedestal extender with a foot thereof is mounted on the head of the existing pedestal,
- mounting the crane superstructure on the slew bearing.

In preferred embodiments, as also seen in the prior art, the electric motor driven winch is mounted on the revolving superstructure.

In an embodiment the pedestal extender forms a housing in which the flywheel is accommodated, e.g. the pedestal extender having a cylindrical main body forming the periphery of such a housing. In such an embodiment there is no need for both a pedestal extender having a main body and a separate housing for the flywheel. This approach also allows for a maximized diameter of a vertical axis flywheel accommodated in the pedestal extender. It may require running cables, ducts, etc. along the exterior of the pedestal extender instead of through the interior thereof.

In a preferred embodiment the method comprises:
- mounting the electric motor-generator of the flywheel energy storage system to the crane superstructure so that the motor-generator revolves along with the crane superstructure during slewing.

This approach allows for an effective embodiment of the electric circuit between the electrical motor-generator and the electric motor driven winch and any other electrically powered components on the revolving crane superstructure and in the same electric circuit. For example there is no need for electrical collector ring(s), also called slip ring(s), in said circuit to overcome the slew motion of the superstructure. This is for example advantageous in case the electric circuit is a high voltage circuit, e.g. a 930 DC circuit that powers the electric motor driven winch.

It is noted that it is preferred for the electric motor that drives the winch to be an alternating current AC motor, e.g. a variable frequency motor. A DC/AC converter is then provided between the DC electric circuit, also called grid or bus, and the AC winch motor. It will be appreciated that the crane may have one or more other electric motors besides the winch motor, e.g. a slew drive motor. As preferred one or more of these other electric motors of the crane, e.g. the slew drive motor, also is an AC motor connected to the DC circuit via an DC/AC converter.

Generally a flywheel energy storage (FES) works by accelerating the flywheel and maintaining the energy in the system as rotational kinetic energy. When energy is extracted from the system, the flywheel's rotational speed is reduced as a consequence of the principle of conservation of energy; adding energy to the system correspondingly results in an increase in the speed of the flywheel.

In a preferred embodiment the flywheel has a vertical axis of rotation, e.g. aligned with the slew axis of the pedestal mounted crane.

In a preferred embodiment the flywheel is made of steel. This appears a robust and attractive alternative for composite plastic material flywheels.

In a preferred embodiment the flywheel has a mass of between 1000 and 8000 kg, e.g. between 3000 and 6000 kg, e.g. of about 4500 to 5500 kg. So, as preferred, generally a heavy flywheel is envisaged that allows for operation at a relatively low rotational speed of the flywheel whilst still being able to store a large amount of energy, e.g. in embodiments at least 0,5 MW, e.g. at least 1 MW. For example the maximum rotational speed of the flywheel incorporated in the inventive pedestal mounted crane is 3000 revolutions per minute.

It is noted that the invention avoids placing at least the flywheel in or on the superstructure where space is commonly limited due to other equipment being present. The invention also, in embodiments, allows to avoid the use of compact flywheels that run at very high rotational speeds, e.g. well over 10.000 revolutions per minute. These high speed compact flywheels commonly are rather complex, e.g. in view of requirements on the bearings, costly, and may require undue maintenance.

In a preferred embodiment the outer diameter of the flywheel having a vertical axis of rotation is at least 50% of the inner diameter of the slew bearing, and preferably less than the inner diameter of the slew bearing, for example the flywheel having a diameter between 60% and 90% of the inner diameter of the slew bearing.

It will be appreciated that - as slew bearings of pedestal mounted crane commonly have a large diameter in order to absorb the loads resulting from operating the crane - such a large outer diameter flywheel, and any housing of the flywheel when present as part of the support structure, more or less occludes the vertical passage through the pedestal. This is however in many, if not most, case not problematic. For example many existing pedestal mounted cranes have an access ladder on the exterior of the pedestal, e.g. leading to a circular access platform on the exterior of the pedestal where the crane operator can access another ladder that is connected to the revolving superstructure in order to gain access to a crane operator cabin of the superstructure. This embodiment is also seen as advantageous in the context of the present invention.

In a practical embodiment the outer diameter of the flywheel may be between 3 and 7 meters, e.g. between 4 and 6 meters, e.g. about 5 meter. For example the weight of the flywheel may then be between 1000 and 8000 kg, e.g. between 3000 and 6000 kg, e.g. of about 4500 to 5500 kg. For example the flywheel is then made of steel.

In an embodiment the outer diameter of the flywheel, or of a housing in which said flywheel is arranged, fits within the inner diameter of the head of the existing pedestal and/or of the pedestal extender when present. This allows for the flywheel, or a housing in which said flywheel is arranged, to be lowered from above into the pedestal and/or into the pedestal extender via the head.

In a preferred embodiment, for example in an embodiment with the electric motor-generator being mounted to the crane superstructure and the flywheel and support structure thereof being supported on the pedestal, e.g. by the pedestal extender, it is envisaged that a flexible mechanical coupling is provided between the electric motor-generator on the one hand and the flywheel on the other hand, e.g. to allow for alignment errors, minor relative motions, etc. For example the flexible mechanical coupling is embodied as a vertically telescoping coupling to deal with vertical alignment error and/or motion, e.g. a splined coupling with splines. Other flexible mechanical couplings may also be provided.

Preferably the motor-generator is directly coupled to the flywheel, so the motor-generator having a rotor part revolving at the same speed as the flywheel. This allows to avoid the use of a transmission. Preferably the flywheel is mounted on a vertical shaft that is held in an arrangement of one or more bearings, wherein the motor has a vertical shaft aligned with the flywheel shaft, preferably a flexible coupling being provided between these two shafts. It is preferred for the stator part of the motor-generator to be secured to the revolving superstructure as explained herein.

In an embodiment a clutch is provided between the flywheel and the motor-generator. For example the clutch is connected to a clutch control that is configured to disengage the motor-generator from the flywheel in case the electrical circuit to the electric motor of the winch is shut off. This will stop the motor-generator and avoid undue effects in the electrical circuit.

In an embodiment the motor-generator is an EX-proof motor-generator.

The electric motor driving the winch may be coupled to the winch via various transmissions, e.g. in a preferred embodiment a gear transmission, or e.g. a hydraulic transmission. For example the electric motor drives a hydraulic pump that supplies pressurized hydraulic liquid to a hydraulic motor coupled to the winch. This is referred to a an electro hydraulic drive of the winch.

In an embodiment a flywheel housing is provided wherein the flywheel is arranged. Preferably the flywheel housing forms a gas-tight chamber wherein the flywheel is arranged. Preferably an vacuum device is provided that is adapted to cause a vacuum, or partial vacuum, in the gas-tight chamber thereby reducing drag.

In an embodiment the pedestal extender is embodied as a flywheel containment cage that is configured to retain the flywheel in case of failure, e.g. of the flywheel breaking free of its bearings or support structure. For example the pedestal extender is provided with multiple containment reinforcements along an inner and/or outer perimeter of the pedestal extender at the level of the flywheel accommodate within the pedestal extender.

For example at least three flywheel containment reinforcements are distributed over the periphery of the pedestal extender, e.g. on its inside circumference and/or along its outside circumference. The containment reinforcements are structured to retain the broken free flywheel within the pedestal extender.

In a preferred embodiment it is envisaged that the pedestal extender is provided on its exterior with multiple containment reinforcements, e.g. steel reinforcements, that are also embodied as jack supports. Each jack support, e.g. three or four in total, is embodied so that a jack, e.g. a hydraulic jack, can be placed on the jack support, which jack is used for lifting the crane superstructure and/or the slew bearing to be lifted from the pedestal extender, e.g. for inspection of the slew bearing. It is noted that the provision of jack supports is common in pedestal mounted cranes for the purpose of temporarily lifting the slew bearing and/or superstructure. Here it is envisaged that same structural containment reinforcements have the dual functionality of providing flywheel containment and jack support. For example a containment reinforcement has a horizontal top member that is configured to support a jack thereon.

It is envisaged that a containment reinforcement is sacrificial, e.g. deforming and/or breaking due to energy from the spinning flywheel being absorbed by the reinforcement in the process of deformation, breaking. It will be appreciated that adjacent portions of the main body may also contributed to the absorption of energy from a flywheel that has broken loose. In embodiments the housing of the flywheel may be provided with containment reinforcements, e.g. in addition to such reinforcements integrated in the extender or as an alternative thereof.

In an embodiment a containment reinforcement comprises one or more vertical steel webs welded to the main body. For example a top member spans over a set of vertical steel webs.

In an embodiment a vertical steel web of a containment reinforcement is welded at a lower end thereof to a foot flange of the pedestal extender.

In an embodiment the pedestal extender has an annular main body with a circular flange on the lower end thereof, said circular flange forming the foot of the extender, and with a circular flange on the upper end thereof, said circular flange forming the head of the extender.

For example the annular main body of the pedestal extender has a cylindrical cross-section.

For example the pedestal extender is a rigid steel component.

In an embodiment the exterior of the pedestal extender is provided with multiple containment reinforcements that are also embodied as jack supports, wherein the pedestal extender has an annular main body with a circular flange on the lower end thereof, which circular flange forms a foot of the extender and radial extends outward of the annular main body, and wherein the containment reinforcements are each raised from said radially outward extending flange.

In embodiment the electric motor-generator and the electric motor driven winch are embodied to operate in a 930 V DC electric circuit or grid.

In an embodiment the flywheel energy storage system comprises a first electric motor-generator connected to the electric motor driven winch of the crane, e.g. mounted above a vertical rotational axis flywheel, and further comprises a second electric motor-generator, preferably only operated as motor to drive the flywheel, which is coupled to the same flywheel, e.g. below a vertical rotational axis flywheel.

In an embodiment with a second electric motor-generator coupled to the same flywheel it is envisaged that, in an embodiment, second motor-generator is electrically connected to an distinct electric circuit, e.g. an alternating current AC grid with the first electric motor-generator being connected in a direct current DC grid. For example the second motor-generator is connected in a main electric grid of the structure on which the crane is mounted, e.g. e.g. the main electric grid of a vessel. For example the first electric motor-generator is connected in a 930 V DC grid and the second motor-generator is connected in a 480 V AC grid.

In an embodiment a direct current DC grid is present wherein the first electric motor-generator and the electric motor driven winch of the crane are connected, e.g. a 930 V DC grid, and the structure on which the pedestal is mounted is provided with an alternating current AC grid, e.g. a 480 V AC grid. In an embodiment herein there is no electrical connection, in particular no electrical transformer, between the direct current DC grid and the alternating current AC grid. Herein a second electric motor-generator powered by the AC grid is provided mainly, or solely, as a drive motor to provide energy to the flywheel. In this arrangement the flywheel forms a sort of mechanical transformer between the two grids, which avoids any issues that or normally seen with grids coupled (also) via an electrical transformer, such a voltage fluctuations, etc.

In an embodiment a combustion engine, e.g. diesel engine, powered electrical generator is provided that provides electrical energy to the electric motor driven winch of the pedestal mounted crane. As explained herein, the provision of the flywheel energy system may allow to reduce the environmental impact of such a combustion engine, e.g. as the flywheel allows to reduce fluctuating power demands on the combustion engine. The combustion engine can be mounted on the superstructure, in or near the pedestal, or at a remote location.

The present invention also relates to a pedestal mounted crane that has been retrofitted with a flywheel energy storage system, wherein the pedestal mounted crane comprises:
- an existing pedestal, the pedestal extending between a foot thereof that is adapted to mount or mounts the existing pedestal to a structure, for example an offshore structure or a hull of a vessel, and a head thereof, wherein the head is configured to mount a slew bearing thereon,
- an existing revolving crane superstructure, which revolving crane superstructure is mounted on a slew bearing, the slew bearing enabling slewing of the crane superstructure relative to the pedestal about a vertical slew axis, wherein the revolving crane superstructure comprises a crane boom, e.g. a luffable rigid crane boom or a knuckle-boom,
- an existing hoisting system configured for lifting and lowering a load, the hoisting system comprising a motor driven hoisting winch and an associated hoisting wire, as well as one or more sheaves configured to guide the hoisting wire, at least one of said sheaves being mounted on the boom and the hoisting wire depending from said sheave to a load connector of the hoisting system,

wherein the pedestal mounted crane is provided with a flywheel energy storage system comprising:
   - a flywheel having an outer diameter and a rotational axis,
   - a flywheel support structure provided with one or more bearings that support the flywheel rotatably relative to the flywheel support structure,
   - an electric motor-generator coupled to the flywheel,
wherein at least the flywheel and at least a part of the flywheel support structure are accommodated in the pedestal, e.g. in the existing pedestal and/or in a pedestal extender that has been optionally mounted on the head of the existing pedestal with an existing slew bearing having been removed from said head and the slew bearing then being mounted on a head of the pedestal extender,
and wherein an electrical circuit is provided between the motor-generator of the flywheel energy storage system and an electric motor that drives the hoisting winch.

It will be appreciated that the pedestal mounted crane that has been retrofitted with a flywheel energy storage system may have one or more of the features discussed herein with reference to the inventive method.

The present invention also relates to a pedestal extender configured to be mounted on the head of a pedestal of a pedestal mounted crane, e.g. an existing pedestal mounted crane, wherein the pedestal extender supports, e.g. has mounted thereto, e.g. integrated therewith, a flywheel support structure and a flywheel, wherein the flywheel support structure is provided with one or more bearings that support the flywheel rotatably relative to the flywheel support structure. Preferably the pedestal extender has a head configured to mount a slew bearing thereon.

The present invention also relates to a kit of parts configured to retrofit an existing pedestal mounted crane with a flywheel energy storage system, wherein the kit of parts comprises:
- a pedestal extender configured to be mounted on the head of a pedestal of an existing pedestal mounted crane,
- a flywheel energy storage system comprising:
   - a flywheel having an outer diameter and a rotational axis,
   - a flywheel support structure provided with one or more bearings that support the flywheel rotatably relative to the flywheel support structure,
   - an electric motor-generator coupled to the flywheel,
wherein at least the flywheel and at least a part of the flywheel support structure are configured to be accommodated, or are accommodated, in the pedestal and/or in a pedestal extender, e.g. at least the flywheel fully within the pedestal extender.

The present invention also relates to an offshore structure, e.g. a production platform for hydrocarbons, etc., provided with one or more inventive cranes as discussed herein.

The invention will now be elucidate with reference to the drawings. In the drawings:
- fig. 1 illustrates an offshore vessel provided with an existing pedestal mounted crane to be retrofitted with a flywheel energy storage system according to the invention,
- fig. 2 illustrates schematically the existing pedestal of the crane of figure 1, the pedestal extender, the flywheel energy system, the slew bearing, and a lower portion of the crane superstructure,
- fig. 3 illustrates the lifting of the superstructure and dismounting of the existing slew bearing from the existing pedestal,
- fig. 4 illustrates the pedestal, pedestal extender, and flywheel energy storage system of the retrofitted pedestal mounted crane of figure 2,
- fig. 5 illustrates a schematic horizontal cross section through the pedestal extender of figure 4 at the level of the flywheel containment reinforcements,
- fig. 6 illustrates an alternative embodiment of the retrofitted pedestal mounted crane of figure 2,
- fig. 7 illustrates the electric system and components of an embodiment of a crane according to the invention,
- fig. 8 illustrates yet another alternative embodiment of the retrofitted pedestal mounted crane of figure 2,
- fig. 9 illustrates an electric system and components of an embodiment of a crane according to the invention.

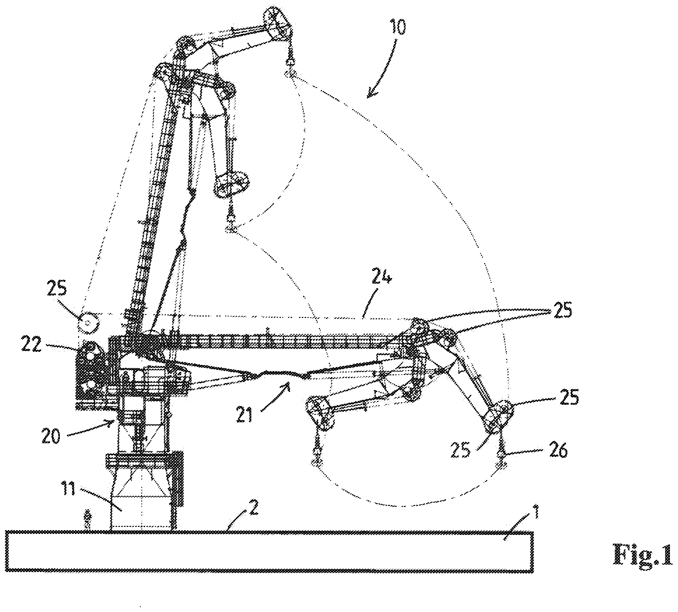

Figure 1 illustrates a hull 1, highly schematically, of an offshore vessel and a knuckle-boom type pedestal mounted crane 10 that is mounted on the hull 1 of the vessel.

In the context of this document the exemplary pedestal mounted crane 10 is considered the existing pedestal mounted crane 10. The crane 10 comprises an existing pedestal 11, the pedestal extending between a foot 12 thereof that mounts, here fixates, the pedestal to the hull 1 and a head 13 thereof. As explained the head 13 is of common design with a circular head flange 13 that is configured to mount a slew bearing thereon.

The pedestal 11 has a height above a deck 2 of the vessel. As the figure 1 is to scale, the general dimensions can be appreciated when considering the person standing next to the pedestal.

For example the pedestal 11 is a hollow steel structure, e.g. having a height of at least 2 meters.

As often, the foot 12 of the pedestal is welded to the hull.

An existing slew bearing 14 is mounted on the head 13 of the pedestal 11. The slew bearing has an inner diameter and a vertical slew axis 15. For example the slew bearing has a bearing ring secured, e.g. bolted, to the head 13, and another bearing ring secured, e.g. bolted, to the superstructure 20. In embodiments one or more circular arrays of rolling elements are present between the bearing rings.

The crane 10 has an existing revolving crane superstructure 20, which is mounted on the existing slew bearing 14. The slew bearing 14 enables slewing of the crane superstructure 20 relative to the pedestal 10 about the slew axis 15.

The revolving crane superstructure 20 comprises a crane boom 21, here a knuckle-boom. As usual the knuckle boom has an articulated boom with an inner boom section that is pivot at an inner end to a slewable chassis. The inner boom section is luffable by means of one or more hydraulic cylinders. The outer boom section is pivoted to the outer end of the inner boom section, and can be pivoted between extended positions and a folded position, e.g. by one or more hydraulic cylinders.

The crane 10 further comprises an existing hoisting system that is configured for lifting and lowering a load by means of the crane. The hoisting system comprises an electric motor driven hoisting winch 22 that is mounted on the superstructure 20 with one or more electric drive motors 21, here said one or more drive motors 21 driving a winch drum 23 for an associated hoisting wire 24.

The winch 22 and one or more drive motors 21 thereof is mounted on the revolving superstructure 20 so as to revolve along with the superstructure during slewing.

It is noted that in embodiments slewing may be done over 360 degrees or more, yet in other embodiments slewing may be only possible over a smaller slew range.

The crane 10 has one or more sheaves 25 that are configured to guide the hoisting wire 24. As can be seen, in this exemplary knuckle-boom type pedestal mounted crane, the hoisting wire depends from a sheave at the tip of the boom to a load connector, here a hook 26, of the hoisting system.

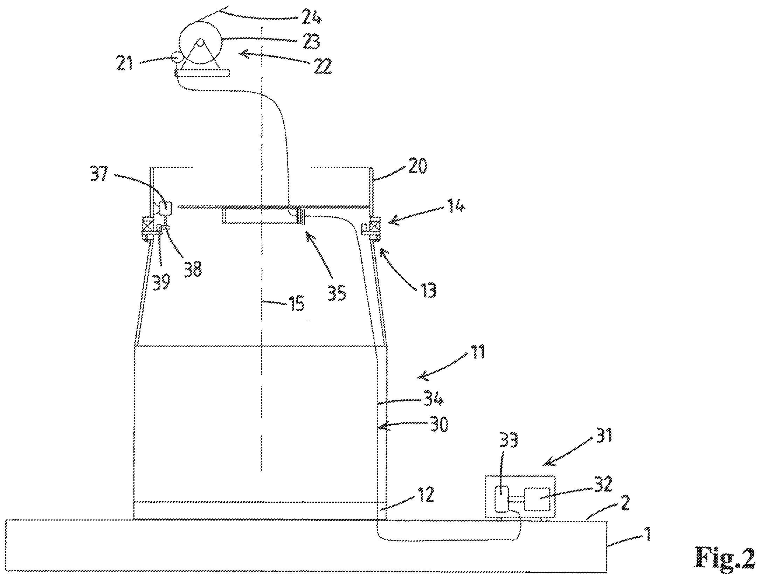

Figure 2 schematically depicts that in the existing crane 10 the drive motor(s) 21 is electrically connected to an electric circuit or grid 30 to which electric power is supplied by an onboard generator set 31 having a combustion engine 32 (e.g. a diesel engine), and an electric generator 33 driven by the engine 32. An electric cable 34 extends through or along the pedestal towards the drive motor 21.

As the electric winch drive motor 21 is arranged on the superstructure 20 here a rotational electric connector 35, or slip ring, is provided in the grid 30 to deal with the slewing motion of the superstructure.

The figure 2 further depicts the slew drive motor 37, here driving a pinion 38 that meshes with a toothed ring 39. The toothed ring 39 can be integrated in the slew bearing 14 as is known in the art.

It will now be explained how the existing pedestal mounted crane 10 is retrofitted with a flywheel energy storage system in accordance with the invention.

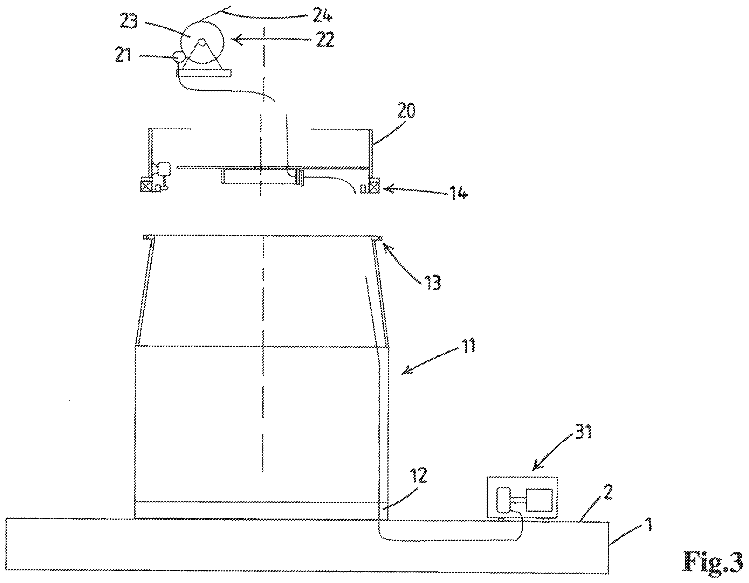

Figure 3 illustrates a situation wherein the existing slew bearing 14 has been dismounted from the head 13 of the existing pedestal 11. This can for example be done by leaving the existing slew bearing attached to the crane superstructure 20 and lifting the entire superstructure as shown here. This can for example be done with a shipyard crane. It is appreciated that one could also detach the superstructure 20 from the bearing 14 first, then remove or just lift the superstructure, and then dismount the bearing 14 from the head 13. As explained the existing bearing 14 can be re-used for the same crane 10 or replaced by another slew bearing 14, even a bearing having a different design than the existing bearing.

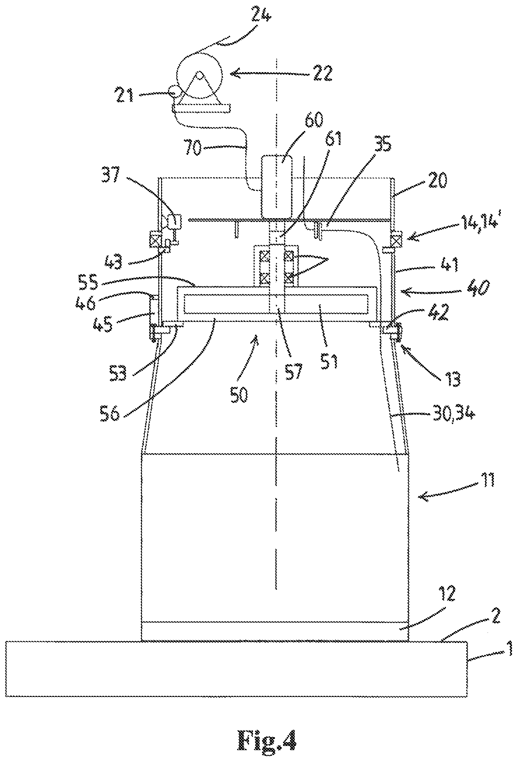

Figure 4 illustrates the situation once the retrofit has been completed.

As illustrated and will be appreciated a pedestal extender 40 has been placed on the head, here the head flange 13, of the existing pedestal 11.

The depicted pedestal extender 40 has an annular main body 41 with a circular flange on the lower end thereof, said circular flange forming the foot 42 of the extender, and with a circular flange on the upper end thereof, said circular flange forming the head 43 of the extender.

The annular main body 41 of the pedestal extender has a cylindrical cross-section.

The pedestal extender 40 is a rigid steel component, e.g. all components being welded to one another.

As illustrated a flywheel energy storage system 50 has been provided that comprises:
- a flywheel 51 having an outer diameter and a rotational axis 52, here as preferred a vertical rotational axis,
- a flywheel support structure 53 provided with one or more bearings 54 that support the flywheel 51 rotatably relative to the flywheel support structure,
- an electric motor-generator 60 coupled to the flywheel 51.

In this example a flywheel housing 55 is provided, here as part of the structure 53, wherein the flywheel 51 is arranged. Preferably the flywheel housing forms a gas-tight chamber 56 wherein the flywheel is arranged. Preferably a vacuum device is provided that is adapted to cause a vacuum, or partial vacuum, in the gas-tight chamber thereby reducing drag.

In general terms it will be appreciated that at least the flywheel 51 and at least a part of the flywheel support structure 53 is accommodated in the pedestal extender 40 that is mounted on the head of the existing pedestal.

Here the existing slew bearing 14 that was removed from the existing head 13 has been mounted on the head 43 of the pedestal extender 40 to serve its purpose. If desired a new bearing 14' is fitted.

It is also illustrated that an electrical circuit 70 is provided between the motor-generator 60 of the flywheel energy storage system and electric drive motor 21 that drives the hoisting winch drum 23. For example this electrical circuit 70 is a DC grid, e.g. of 930 V DC.

It is illustrated here that the electrical motor-generator 60 of the flywheel energy storage system 50 is mounted to the crane superstructure 20 in order to revolve along with the crane superstructure 20 and the winch 22 during slewing.

The figure 4 illustrates the provision of a flexible coupling 61 between the electrical motor-generator 60 on the one hand and the flywheel 51 on the other hand. As explained also a clutch may be provided between the flywheel 51 and the electrical motor-generator 60.

As shown, it is preferred for the motor-generator 60 to be directly coupled to the flywheel 51, preferably on a common shaft assembly as here, so the motor-generator 60 has a rotor part that revolves at the same speed as the flywheel 51.

As shown the flywheel 51 is mounted on a vertical shaft 57 that is held in an arrangement of one or more bearings 54. The motor-generator 60 has a vertical shaft aligned with the flywheel shaft, and as preferred a flexible mechanical coupling 61 is provided between these two shafts.

It is shown here that the flywheel support structure 53 is mounted to the pedestal extender 40, here resting on the lower flange 42 thereof, e.g. secured to said lower flange 42 of the extender 40.

The flywheel 51 here is fully accommodated in the pedestal extender 40, meaning that the flywheel, and preferably also any housing 55 thereof, does not project above and below the extender 40. Preferably also the entire flywheel support structure 53 is accommodated within the pedestal extender 40.

The flywheel 51 as shown here may have mass of about 5000 kg, e.g. made of steel, and may be operated at a relatively low rotational speed, e.g. below 3000 rpm, e.g. of about 2000 rpm, whilst storing a large amount of energy, e.g. at least 0,5 MW, e.g. at least 1 MW.

The diameter of the flywheel 51 is shown as being at least 50% of an inner diameter of the slew bearing 14, and less than the inner diameter of the slew bearing, for example the flywheel having a diameter between 60% and 90% of the inner diameter of the slew bearing.

The diameter of the flywheel 51 may be, in practical embodiments, between 3 and 7 meters, e.g. between 4 and 6 meters.

As explained it is conceivable that a subassembly of the pedestal extender 40 and the flywheel support structure 53 supporting the flywheel 51 is made, possibly even with the slew bearing on the head of the extender 40, and that this subassembly is then mounted as a unit on the head of the existing pedestal 10.

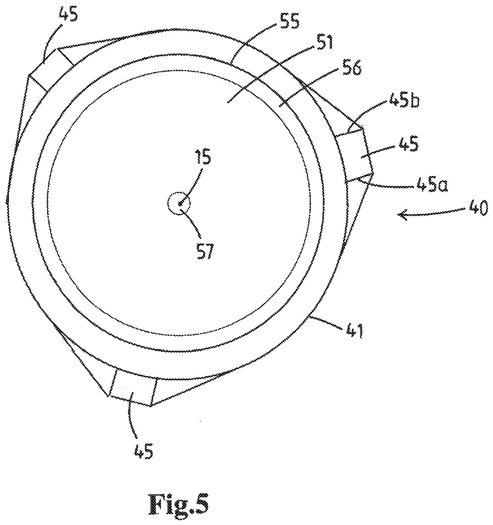

The figures 4 and 5 illustrate that the pedestal extender 30 is provided with multiple containment reinforcements along the outer perimeter of the pedestal extender at the level of the flywheel 51 that is accommodated within the pedestal extender.

In this example three flywheel containment reinforcements 45 are distributed over the periphery of the pedestal extender, along its outside circumference. The containment reinforcements are structured to retain the broken free and spinning flywheel 51 within the pedestal extender 40 should such an event occur.

As preferred the multiple containment reinforcements 45 are also embodied as jack supports. Each jack support, here three in total, is embodied so that a jack, e.g. a hydraulic jack, can be placed on the jack support, which jack is used for lifting the crane superstructure and/or the slew bearing to be lifted from the pedestal extender, e.g. for inspection of the slew bearing. It is noted that the provision of jack supports is common in pedestal mounted cranes for the purpose of temporarily lifting the slew bearing and/or superstructure. Here it is envisaged that same structural containment reinforcements have the dual functionality of providing flywheel containment and jack support. A containment reinforcement has a horizontal top member 46 that is configured to support a jack thereon.

In an embodiment a containment reinforcement comprises one or more vertical steel webs 45a, 45b welded to the main body 41. For example a top member 46 spans over a set of vertical steel webs.

In an embodiment a vertical steel web 45a, b of a containment reinforcement 45 is welded at a lower end thereof to a foot flange 42 of the pedestal extender 40.

Figure 4 also depicts that, in embodiments, there can still be the situation that grid 30 extends through the pedestal 11 to the superstructure, here depicted as cable 34 with slip ring device 35.

In an embodiment the grid 30 is connected to the motor-generator 60, e.g. allowing to power the motor 60 for speeding up the flywheel 51.

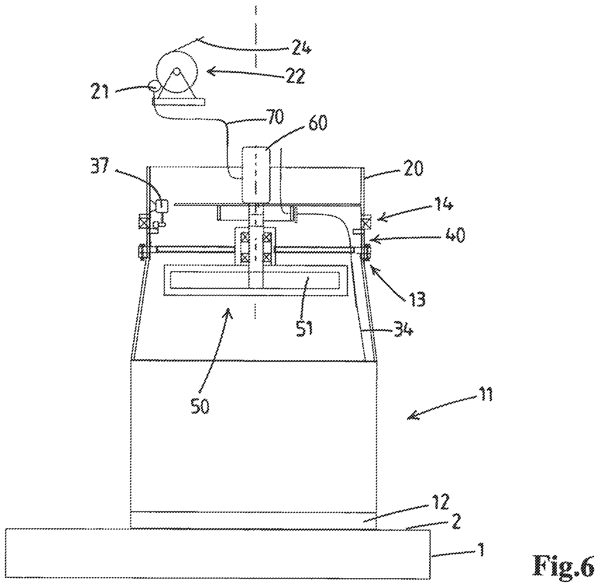

Figure 6 illustrates an alternative embodiment, wherein components being the same and/or having the same functionality as discussed above are depicted with the same reference numeral.

In general terms the pedestal extender 40 shown in figure 6 is shorter than in figure 4. The flywheel 51 is now not accommodate within the extender 40, but is located in the existing pedestal 11, to be more precise in this embodiment within a top portion of the pedestal 11. It will be appreciated that this allows for a reduced increase of the total height of the pedestal after the retrofit compared to the use of the taller extender 40 as shown in figure 4. Of course the recessed accommodation of the flywheel 51, and its housing 55, in the top portion of the existing pedestal may require said space to be emptied or emptied in the retrofit process in order to accommodate these components.

Figure 6 depicts that the flywheel support structure 53 is integrated or connected with the lower flange 42 or foot of the pedestal extender 40.

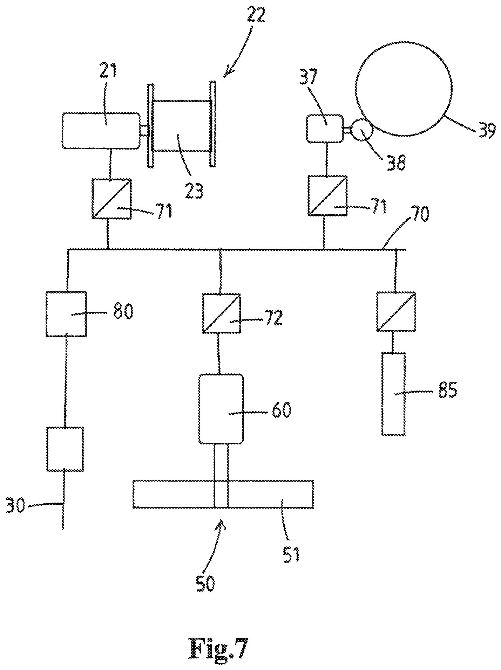

Figure 7 depicts a first electric circuit 70, also called grid or bus, here a direct current DC grid, e.g. a 930 V DC grid. Winch 22 has its one or more electric drive motors 21 connected in this circuit 70, here as preferred AC motors 21 connected via DC/AC converter 71. The same goes, in this example, for the electric slew drive motor 37 that serves for slewing a crane superstructure, here via pinion 38 meshing with toothed ring 39. This motor 37, as preferred, also is an AC motor connected via DC/AC converter 71.

Figure 7 further depicts the flywheel energy storage system with flywheel 51 and the motor-generator 60 that is also connected to the circuit 70. An AC/DC converter 72 is provided to convert the between the DC circuit 70 and the AC sub circuit of the motor-generator 60.

The figure 7 also illustrates the presence of a second electric circuit 30, also called grid or bus, here alternating current AC grid, e.g. a 480 V AC grid.

It is illustrated here that the circuit 30 is electrically connected to circuit 70 via a suitable AC to DC power conversion system 80.

It is illustrated that an electrical power dissipater 85, for example a resistor bank, e.g. a liquid, e.g. water, and/or air cooled resistor bank, is connected to the circuit 70 to allow for rapid dissipation of energy, e.g. in case the flywheel 51 is already spinning at or close to its maximum speed.

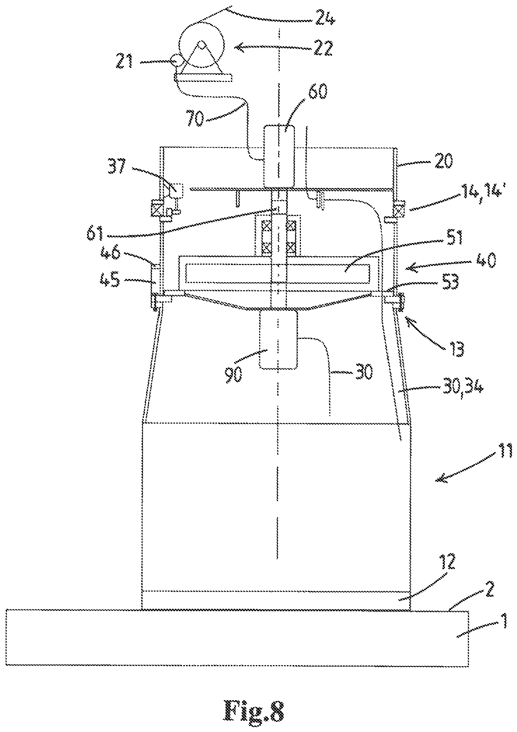

Figure 8 illustrates an alternative embodiment, wherein components being the same and/or having the same functionality as discussed above are depicted with the same reference numeral.

In figure 8 it is illustrated that comprises a second electric motor-generator 90, preferably only operated as motor to drive the flywheel 51, is coupled to the same flywheel 51 as motor-generator 60.

As shown here, with the flywheel 51 having a vertical rotational axis, the motor-generator 60 is arranged above the flywheel 51, so that the superstructure side thereof, whereas the motor-generator 90, or just motor when not operated as generator, is arranged underneath the flywheel 51, so at the bottom side thereof.

The second motor-generator 90 is electrically connected to an distinct electric circuit, so not the same circuit 70 as the motor-generator 60. This may for example be the circuit or grid 30, or yet another grid.

For example the circuit 70 is a direct current DC grid, e.g. a 930 V DC grid. Winch 22 has its one or more electric drive motors 21 connected in this circuit 70, here as explained AC motor(s) connected via DC/AC converter(s) 71.

For example the second motor-generator 90 is then connected to an alternating current AC grid, e.g. grid 30, for example a 480 V AC grid.

It is preferred for the second motor-generator 90 to be supported also by the support structure 53. It will be appreciated that one or more of a flexible coupling and clutch may be present between the motor-generator 90 and the flywheel 51.

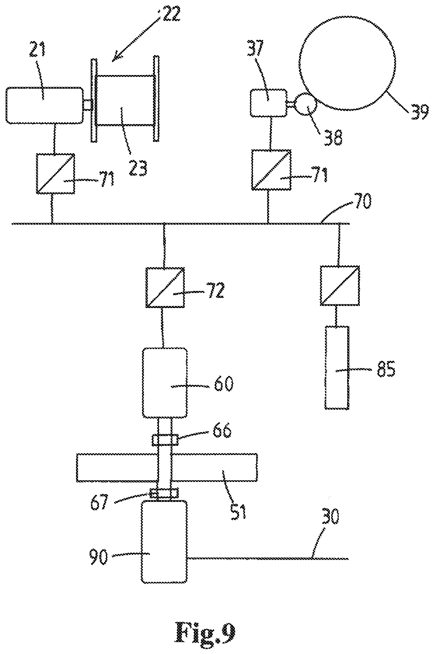

Figure 9 illustrates highly schematically a crane, e.g. a pedestal mounted crane, possibly a new pedestal mounted crane to be mounted on a structure or alternatively a retrofitted pedestal mounted crane as discussed herein, which crane is provided with a flywheel energy storage system 50.

Herein the crane comprises a hoisting system configured for lifting and lowering a load, the hoisting system comprising an electric motor driven hoisting winch 22 for an associated hoisting wire. The hoisting system comprises one or more sheaves, e.g. as in crane 10 the sheaves 25, configured to guide the hoisting wire.

The crane is provided with a flywheel energy storage system 50 comprising:
- a flywheel 51 having an outer diameter and a rotational axis,
- a flywheel support structure, e.g. as structure 53 discussed herein, provided with one or more bearings e.g. as bearings 54 discussed herein, that support the flywheel rotatably relative to the flywheel support structure,
- a first electric motor-generator 60 coupled to the flywheel 51.

A first electrical circuit 70, as discussed herein, is provided between the first motor-generator 60 of the flywheel energy storage system 50 and electric motor 21 that drives the hoisting winch 22, e.g. the drum 23 thereof.

The crane further comprises a second electric motor-generator 90 which is coupled to the same flywheel 51, preferably the component 90 only being operated as a motor to drive the flywheel 51.

It is shown that the second electric motor-generator 90 is electrically connected to a distinct second electric circuit 30.

In an embodiment the first electric motor-generator 60 is connected in a direct current DC first electric circuit, e.g. 930 V DC grid, and the second electric motor-generator 90 is connected in a an alternating current AC second electric circuit 30, for example a 480 V AC grid. As explained, preferably, motor 21 is an AC motor that is connected to the DC grid via converter 71.

In the depicted embodiment there is no electrical connection between the first electric circuit 70 that links to the winch motor 21 and the second electric circuit 30 that links to the second electric motor-generator 60, or just motor 60, so no electrical power conversion system between the two grids 70, 30, here the one being an DC grid and the other being an AC grid.

A clutch 66 may be provided between the flywheel 51 and the first electric motor-generator 60 and/or a clutch 67 may be provided between the flywheel 51 and the second electric motor-generator 90.

In an embodiment the crane has a pedestal and a revolving crane structure mounted on the pedestal via a slew bearing, e.g. as discussed herein, wherein the electric motor driven hoisting winch 22 is mounted on the superstructure 20 and wherein the flywheel support structure 53 is mounted on the pedestal 11 or on a pedestal extender 40 as described herein.

For example the flywheel has a vertical axis of rotation and the first electric motor-generator 60 is arranged above the flywheel and the second electric motor-generator 60 below the flywheel 51 in a pedestal crane, for example with the first electric motor-generator 60 mounted on the revolving superstructure 20 and the second electric motor-generator 60 stationary relative to the pedestal 11 or pedestal extender 40.

## Claims

1. A method for retrofitting an existing pedestal mounted crane with a flywheel energy storage system, wherein the existing pedestal mounted crane (10) comprises:
- an existing pedestal (11), the pedestal extending between a foot thereof (12) that is adapted to mount or mounts the pedestal to a structure, for example an offshore structure or a hull of a vessel, and a head (13) thereof, wherein the head is configured to mount a slew bearing thereon;
- an existing slew bearing (14) mounted on the head of the pedestal, the slew bearing having an inner diameter and a vertical slew axis (15),
- an existing revolving crane superstructure (20), which revolving crane superstructure is mounted on the slew bearing, the slew bearing enabling slewing of the crane superstructure relative to the pedestal about the slew axis, wherein the revolving crane superstructure comprises a crane boom,
- an existing hoisting system configured for lifting and lowering a load, the hoisting system comprising a motor driven hoisting winch (22) and an associated hoisting wire (24), as well as one or more sheaves (25) configured to guide the hoisting wire, at least one of said sheaves being mounted on the boom and the hoisting wire depending from said sheave to a load connector of the hoisting system,
wherein the method comprises:
- providing a flywheel energy storage system (50) comprising:
- a flywheel (51) having an outer diameter and a rotational axis,
- a flywheel support structure (53) provided with one or more bearings (54) that support the flywheel rotatably relative to the flywheel support structure,
- an electric motor-generator (60) coupled to the flywheel (51),
- accommodating at least the flywheel (50) and at least a part of the flywheel support structure (53) in the pedestal, e.g. in the existing pedestal and/or in a pedestal extender (40) that is optionally mounted on the head (13) of the existing pedestal with the existing slew bearing (14) being removed from said head (13) and a slew bearing (14') then being mounted on a head (42) of the pedestal extender,
- providing an electrical circuit (70) between the motor-generator (60) of the flywheel energy storage system and an electric motor (21) that drives the hoisting winch (22).

2. Method according to claim 1, wherein the method comprises:
- dismounting the existing slew bearing (14) from the head (13) of the existing pedestal, e.g. including the step of lifting the crane superstructure relative to the existing pedestal,
- arranging a pedestal extender (40) on the head of the existing pedestal,
- mounting a slew bearing (14,14') on a head of the pedestal extender, e.g. said dismounted existing slew bearing or a new slew bearing,
- accommodating at least the flywheel (51) and at least a part of the flywheel support structure (53) in the existing pedestal and/or in a pedestal extender,
- mounting the crane superstructure (20) on the slew bearing.

3. Method according to claim 1 or 2, wherein the flywheel support structure is mounted directly to the head of the existing pedestal, preferably after removal of the slew bearing from said head, or wherein the flywheel support structure (53) is mounted to the pedestal extender that is mounted on the head of the existing pedestal after removal of the existing slew bearing.

4. Method according to claim 1, wherein the method comprises:
- dismounting the existing slew bearing (14) from the head (13) of the existing pedestal, e.g. including the step of lifting the crane superstructure relative to the existing pedestal,
- arranging a pedestal extender (40) with a foot thereof on the head of the existing pedestal, so that the foot of the pedestal extender is supported by the head of the existing pedestal,
- mounting a slew bearing (14,14') on a head of the pedestal extender, e.g. said dismounted existing slew bearing or a new slew bearing,
- accommodating at least the flywheel (51) and the flywheel support structure within the pedestal extender, preferably the support structure being mounted to the pedestal extender,
- mounting the crane superstructure on the slew bearing.

5. Method according to any of claims 1 - 4, wherein the method comprises:
- assembly of a pedestal extender and the flywheel support structure supporting the flywheel into a subassembly,
- dismounting the existing slew bearing from the head of the existing pedestal,
- mounting a slew bearing on the head of the pedestal extender, e.g. said dismounted existing slew bearing or a new slew bearing,
- arranging the subassembly on the existing pedestal, so that the pedestal extender with a foot thereof is mounted on the head of the existing pedestal,
- mounting the crane superstructure (20) on the slew bearing (14').

6. Method according to any of claims 1 - 5, wherein the method comprises:
- mounting the electrical motor-generator (60) of the flywheel energy storage system to the crane superstructure (20) to revolve along with the crane superstructure during slewing.

7. Method according to any of claims 1-6, wherein
the flywheel (51) is accommodated so that the axis of rotation thereof is vertical, e.g. aligned with the slew axis (15) of the pedestal mounted crane;
and/or
the flywheel (51) has a mass of between 1000 and 8000 kg, e.g. operated at a rotational speed storing a large amount of energy, e.g. at least 0,5 MW, e.g. at least 1 MW.

8. Method according to any of claims 1-7, wherein the flywheel (51) is accommodated so that the axis of rotation thereof is vertical, and wherein the diameter of the flywheel is at least 50% of an inner diameter of the slew bearing (14,14'), and preferably less than the inner diameter of the slew bearing, for example the flywheel having a diameter between 60% and 90% of the inner diameter of the slew bearing.

9. Method according to any of claims 1-8, wherein the diameter of the flywheel (51) is between 3 and 7 meters, e.g. between 4 and 6 meters.

10. Method according to any of claims 1-9, wherein the electrical motor-generator (60) is mounted to the crane superstructure and wherein the flywheel (51) and the support structure thereof are supported on the pedestal, e.g. by the pedestal extender (40), and wherein the method comprises the provision of a flexible coupling (61) between the electrical motor-generator on the one hand and the flywheel on the other hand.

11. Method according to any of claims 1 - 10, wherein the motor-generator (60) is directly coupled to the flywheel, so the motor-generator has a rotor part that revolves at the same speed as the flywheel (51), for example wherein the flywheel is mounted on a vertical shaft that is held in an arrangement of one or more bearings (54), wherein the motor-generator has a vertical shaft aligned with the flywheel shaft, preferably a flexible coupling being provided between these two shafts.

12. A pedestal mounted crane (10) that has been retrofitted with a flywheel energy storage system, wherein the pedestal mounted crane comprises:
- an existing pedestal (11), the pedestal extending between a foot thereof that is adapted to mount or mounts the existing pedestal to a structure, for example an offshore structure or a hull of a vessel, and a head thereof, wherein the head is configured to mount a slew bearing thereon,
- an existing revolving crane superstructure (20), which revolving crane superstructure is mounted on a slew bearing (14), the slew bearing enabling slewing of the crane superstructure relative to the pedestal about a vertical slew axis, wherein the revolving crane superstructure comprises a crane boom,
- an existing hoisting system configured for lifting and lowering a load, the hoisting system comprising a motor driven hoisting winch and an associated hoisting wire (24), as well as one or more sheaves (25) configured to guide the hoisting wire, at least one of said sheaves being mounted on the boom and the hoisting wire depending from said sheave to a load connector of the hoisting system,
wherein the pedestal mounted crane is provided with a flywheel energy storage system (50) comprising:
- a flywheel (51) having an outer diameter and a rotational axis,
- a flywheel support structure (53) provided with one or more bearings (54) that support the flywheel rotatably relative to the flywheel support structure,
- an electric motor-generator (60) coupled to the flywheel,
wherein at least the flywheel and at least a part of the flywheel support structure are accommodated in the pedestal, e.g. in the existing pedestal and/or in a pedestal extender that has been optionally mounted on the head of the existing pedestal with an existing slew bearing having been removed from said head and the slew bearing then being mounted on a head of the pedestal extender,
and wherein an electrical circuit (70) is provided between the motor-generator of the flywheel energy storage system and an electric motor (21) that drives the hoisting winch (22).

13. A pedestal extender (40) configured to be mounted on the head (13) of a pedestal (11) of a pedestal mounted crane, e.g. an existing pedestal mounted crane, for use in a method according to claim 1 or for providing a pedestal mounted crane according to claim 12, wherein the pedestal extender supports, e.g. has mounted thereto, a flywheel support structure (53) and a flywheel (51), wherein the flywheel support structure is provided with one or more bearings (54) that support the flywheel rotatably relative to the flywheel support structure.

14. A kit of parts configured to retrofit an existing pedestal mounted crane (10) with a flywheel energy storage system (50), for use in a method according to claim 1 or for providing a pedestal mounted crane according to claim 12, wherein the kit of parts comprises:
- a pedestal extender (40) according to claim 13
- a flywheel energy storage system (50) comprising:
- a flywheel (51) having an outer diameter and a rotational axis,
- a flywheel support structure (53) provided with one or more bearings (54) that support the flywheel rotatably relative to the flywheel support structure,
- an electric motor-generator (60) coupled to the flywheel,
wherein at least the flywheel and at least a part of the flywheel support structure are configured to be accommodated in the pedestal and/or in a pedestal extender, e.g. at least the flywheel fully within the pedestal extender.

15. An offshore structure or a vessel provided with a pedestal mounted crane retrofitted in accordance with the method of any of claims 1 - 11 or provided with a pedestal mounted crane according to claim 12.

## Patentansprüche

1. Verfahren zum Nachrüsten eines bestehenden sockelmontierten Krans mit einem Schwungrad-Energiespeichersystem, wobei der bestehende sockelmontierte Kran (10) umfasst:
- einen bestehenden Sockel (11), wobei sich der Sockel zwischen einem Fuß davon (12), der ausgestaltet ist, um den Sockel an einer Struktur, zum Beispiel einer Offshore-Struktur oder einem Rumpf eines Schiffes, anzubringen oder den Sockel an der Struktur anbringt, und einem Kopf (13) davon erstreckt, wobei der Kopf ausgestaltet ist, ein Schwenklager daran anzubringen;
- ein bestehendes Schwenklager (14), das an dem Kopf des Sockels angebracht ist, wobei das Schwenklager einen Innendurchmesser und eine vertikale Schwenkachse (15) aufweist,
- einen bestehenden drehbaren Kranoberbau (20), wobei der drehbare Kranoberbau an dem Schwenklager angebracht ist, wobei das Schwenklager ein Schwenken des Kranoberbaus relativ zu dem Sockel um die Schwenkachse ermöglicht, wobei der drehbare Kranoberbau einen Kranausleger umfasst,
- ein bestehendes Hebesystem, das zum Heben und Senken einer Last ausgestaltet ist, wobei das Hebesystem eine motorgetriebene Hebewinde (22) und ein zugeordnetes Hebeseil (24) sowie eine oder mehrere Rollen (25) umfasst, die ausgestaltet sind, um das Hebeseil zu führen, wobei mindestens eine der Rollen an dem Ausleger angebracht ist und das Hebeseil von der Rolle zu einem Lastverbinder des Hebesystems herabhängt,
wobei das Verfahren umfasst:
- Bereitstellen eines Schwungrad-Energiespeichersystems (50), umfassend:
- ein Schwungrad (51), das einen Außendurchmesser und eine Drehachse aufweist,
- eine Schwungrad-Haltestruktur (53), die mit einem oder mehreren Lagern (54) versehen ist, die das Schwungrad relativ zu der Schwungrad-Haltestruktur drehbar halten,
- einen elektrischen Motor-Generator (60), der mit dem Schwungrad (51) gekoppelt ist,
- Unterbringen von zumindest dem Schwungrad (50) und zumindest einem Teil der Schwungrad-Haltestruktur (53) in dem Sockel, z.B. in dem bestehenden Sockel und/oder in einer Sockelerweiterung (40), die optional an dem Kopf (13) des bestehenden Sockels angebracht ist, wobei das bestehende Schwenklager (14) von dem Kopf (13) entfernt wird und ein Schwenklager (14') dann an einem Kopf (42) der Sockelerweiterung angebracht wird,
- Bereitstellen einer elektrischen Schaltung (70) zwischen dem Motor-Generator (60) des Schwungrad-Energiespeichersystems und einem Elektromotor (21), der die Hebewinde (22) antreibt.

2. Verfahren nach Anspruch 1, wobei das Verfahren umfasst:
- Abbauen des bestehenden Schwenklagers (14) von dem Kopf (13) des bestehenden Sockels, z. B. einschließlich des Schritts eines Anhebens des Kranoberbaus relativ zu dem bestehenden Sockel,
- Anordnen einer Sockelerweiterung (40) an dem Kopf des bestehenden Sockels,
- Anbringen eines Schwenklagers (14, 14') an einem Kopf der Sockelerweiterung, z. B. des abgebauten bestehenden Schwenklagers oder eines neuen Schwenklagers,
- Unterbringen von zumindest dem Schwungrad (51) und zumindest einem Teil der Schwungrad-Haltestruktur (53) in dem bestehenden Sockel und/oder in einer Sockelerweiterung,
- Anbringen des Kranoberbaus (20) an dem Schwenklager.

3. Verfahren nach Anspruch 1 oder 2, wobei die Schwungrad-Haltestruktur direkt an dem Kopf des bestehenden Sockels angebracht wird, vorzugsweise nach Entfernung des Schwenklagers von dem Kopf, oder wobei die Schwungrad-Haltestruktur (53) an der Sockelerweiterung angebracht wird, die nach Entfernung des bestehenden Schwenklagers an dem Kopf des bestehenden Sockels angebracht wird.

4. Verfahren nach Anspruch 1, wobei das Verfahren umfasst:
- Abbauen des bestehenden Schwenklagers (14) von dem Kopf (13) des bestehenden Sockels, z. B. einschließlich des Schritts eines Anhebens des Kranoberbaus relativ zu dem bestehenden Sockel,
- Anordnen einer Sockelerweiterung (40) mit einem Fuß davon auf dem Kopf des bestehenden Sockels, so dass der Fuß der Sockelerweiterung durch den Kopf des bestehenden Sockels gehalten wird,
- Anbringen eines Schwenklagers (14, 14') an einem Kopf der Sockelerweiterung, z. B. des abgebauten bestehenden Schwenklagers oder eines neuen Schwenklagers,
- Unterbringen von zumindest dem Schwungrad (51) und der Schwungrad-Haltestruktur innerhalb der Sockelerweiterung, wobei die Haltestruktur vorzugsweise an der Sockelerweiterung angebracht ist,
- Anbringen des Kranoberbaus an dem Schwenklager.

5. Verfahren nach einem der Ansprüche 1 - 4, wobei das Verfahren umfasst:
- Zusammenbau einer Sockelerweiterung und der Schwungrad-Haltestruktur, die das Schwungrad hält, zu einer Unterbaugruppe,
- Abbauen des bestehenden Schwenklagers von dem Kopf des bestehenden Sockels,
- Anbringen eines Schwenklagers an dem Kopf der Sockelerweiterung, z. B. des abgebauten bestehenden Schwenklagers oder eines neuen Schwenklagers,
- Anordnen der Unterbaugruppe auf dem bestehenden Sockel, so dass die Sockelerweiterung mit einem Fuß davon an dem Kopf des bestehenden Sockels angebracht wird,
- Anbringen des Kranoberbaus (20) an dem Schwenklager (14').

6. Verfahren nach einem der Ansprüche 1 - 5, wobei das Verfahren umfasst:
- Anbringen des elektrischen Motor-Generators (60) des Schwungrad-Energiespeichersystems an dem Kranoberbau (20), um sich während eines Schwenkens zusammen mit dem Kranoberbau zu drehen.

7. Verfahren nach einem der Ansprüche 1 - 6, wobei
das Schwungrad (51) so untergebracht wird, dass die Drehachse davon vertikal ist, z.B. ausgerichtet zu der Schwenkachse (15) des sockelmontierten Krans; und/oder
das Schwungrad (51) eine Masse zwischen 1000 und 8000 kg aufweist, z.B. betrieben mit einer Drehgeschwindigkeit, die eine große Menge an Energie speichert, z.B. mindestens 0,5 MW, z.B. mindestens 1 MW.

8. Verfahren nach einem der Ansprüche 1 - 7, wobei das Schwungrad (51) so untergebracht ist, dass die Drehachse davon vertikal ist, und wobei der Durchmesser des Schwungrads mindestens 50 % eines Innendurchmessers des Schwenklagers (14, 14') und vorzugsweise weniger als der Innendurchmesser des Schwenklagers beträgt, wobei zum Beispiel das Schwungrad einen Durchmesser zwischen 60 % und 90 % des Innendurchmessers des Schwenklagers aufweist.

9. Verfahren nach einem der Ansprüche 1 - 8, wobei der Durchmesser des Schwungrads (51) zwischen 3 und 7 Metern, z.B. zwischen 4 und 6 Metern, liegt.

10. Verfahren nach einem der Ansprüche 1 - 9, wobei der elektrische Motor-Generator (60) an dem Kranoberbau angebracht ist und wobei das Schwungrad (51) und die Haltestruktur davon an dem Sockel, z.B. durch die Sockelerweiterung (40), gehalten werden, und wobei das Verfahren die Bereitstellung einer flexiblen Kopplung (61) zwischen dem elektrischen Motor-Generator einerseits und dem Schwungrad andererseits umfasst.

11. Verfahren nach einem der Ansprüche 1-10, wobei der Motor-Generator (60) direkt mit dem Schwungrad gekoppelt ist, so dass der Motor-Generator einen Rotorteil aufweist, der sich mit der gleichen Geschwindigkeit wie das Schwungrad (51) dreht, wobei zum Beispiel das Schwungrad an einer vertikalen Welle angebracht ist, die in einer Anordnung von einem oder mehreren Lagern (54) gehalten wird, wobei der Motor-Generator eine vertikale Welle aufweist, die zu der Schwungradwelle ausgerichtet ist, wobei vorzugsweise eine flexible Kopplung zwischen diesen beiden Wellen vorgesehen ist.

12. Sockelmontierter Kran (10), der mit einem Schwungrad-Energiespeichersystem nachgerüstet wurde, wobei der sockelmontierte Kran umfasst:
- einen bestehenden Sockel (11), wobei sich der Sockel zwischen einem Fuß davon, der geeignet ist, den bestehenden Sockel an einer Struktur, beispielsweise einer Offshore-Struktur oder einem Rumpf eines Schiffes, anzubringen, oder den bestehenden Sockel an der Struktur anbringt, und einem Kopf davon erstreckt, wobei der Kopf ausgestaltet ist, um ein Schwenklager daran anzubringen,
- einen bestehenden drehbaren Kranoberbau (20), wobei der drehbare Kranoberbau an einem Schwenklager (14) angebracht ist, wobei das Schwenklager ein Schwenken des Kranoberbaus relativ zu dem Sockel um eine vertikale Schwenkachse ermöglicht, wobei der drehbare Kranoberbau einen Kranausleger umfasst,
- ein bestehendes Hebesystem, das zum Heben und Senken einer Last ausgestaltet ist, wobei das Hebesystem eine motorgetriebene Hebewinde und ein zugeordnetes Hebeseil (24) sowie eine oder mehrere Rollen (25) umfasst, die zum Führen des Hebeseils ausgestaltet sind, wobei mindestens eine der Rollen an dem Ausleger angebracht ist und das Hebeseil von der Rolle zu einem Lastverbinder des Hebesystems herabhängt,
wobei der sockelmontierte Kran mit einem Schwungrad-Energiespeichersystem (50) versehen ist, umfassend:
- ein Schwungrad (51), das einen Außendurchmesser und eine Drehachse aufweist,
- eine Schwungrad-Haltestruktur (53), die mit einem oder mehreren Lagern (54) versehen ist, die das Schwungrad relativ zu der Schwungrad-Haltestruktur drehbar halten,
- einen elektrischen Motor-Generator (60), der mit dem Schwungrad gekoppelt ist,
wobei zumindest das Schwungrad und zumindest ein Teil der Schwungrad-Haltestruktur in dem Sockel untergebracht sind, z.B. in dem bestehenden Sockel und/oder in einer Sockelerweiterung, die optional an dem Kopf des bestehenden Sockels angebracht worden ist, wobei ein bestehendes Schwenklager von dem Kopf entfernt worden ist und das Schwenklager dann an einem Kopf der Sockelerweiterung angebracht worden ist,
und wobei eine elektrische Schaltung (70) zwischen dem Motor-Generator des Schwungrad-Energiespeichersystems und einem Elektromotor (21), der die Hebewinde (22) antreibt, vorgesehen ist.

13. Sockelerweiterung (40), die ausgestaltet ist, um an dem Kopf (13) eines Sockels (11) eines sockelmontierten Krans, z. B. eines bestehenden sockelmontierten Krans, zur Verwendung in einem Verfahren nach Anspruch 1 oder zum Bereitstellen eines sockelmontierten Krans nach Anspruch 12 angebracht zu werden, wobei die Sockelerweiterung eine Schwungrad-Haltestruktur (53) und ein Schwungrad (51) hält, z.B. daran angebracht aufweist, wobei die Schwungrad-Haltestruktur mit einem oder mehreren Lagern (54) versehen ist, die das Schwungrad drehbar relativ zu der Schwungrad-Haltestruktur halten.

14. Teilesatz, der ausgestaltet ist, einen bestehenden sockelmontierten Kran (10) mit einem Schwungrad-Energiespeichersystem (50) nachzurüsten, zur Verwendung in einem Verfahren nach Anspruch 1 oder zum Bereitstellen eines sockelmontierten Krans gemäß Anspruch 12, wobei der Teilesatz umfasst:
- eine Sockelerweiterung (40) gemäß Anspruch 13,
- ein Schwungrad-Energiespeichersystem (50), umfassend:
- ein Schwungrad (51), das einen Außendurchmesser und eine Drehachse aufweist,
- eine Schwungrad-Haltestruktur (53), die mit einem oder mehreren Lagern (54) versehen ist, die das Schwungrad relativ zu der Schwungrad-Haltestruktur drehbar halten,
- einen elektrischen Motor-Generator (60), der mit dem Schwungrad gekoppelt ist,
wobei zumindest das Schwungrad und zumindest ein Teil der Schwungrad-Haltestruktur ausgestaltet sind, um in dem Sockel und/oder in einer Sockelerweiterung untergebracht zu werden, z.B. zumindest das Schwungrad vollständig innerhalb der Sockelerweiterung.

15. Offshore-Struktur oder Schiff, die bzw. das mit einem sockelmontierten Kran versehen ist, der gemäß dem Verfahren nach einem der Ansprüche 1 - 11 nachgerüstet wurde, oder die bzw. das mit einem sockelmontierten Kran nach Anspruch 12 versehen ist.

## Revendications

1. Procédé de modernisation d'une grue montée sur un socle avec un système de stockage d'énergie à volant d'inertie, dans lequel le grue montée sur socle (10) existante comprend :
- un socle existant (11), ce socle s'étendant entre un pied (12) qui est conçu pour monter le socle sur une structure, par exemple une structure offshore ou la coque d'un navire, et une tête (13), dans lequel la tête est conçu pour monter un palier pivotant sur celle-ci ;
- un palier pivotant existant (14) monté sur la tête du socle, le palier pivotant présentant un diamètre intérieur et un axe d'oscillation vertical (15),
- une superstructure de grue rotative existante (20), cette superstructure de grue rotative étant montée sur le palier pivotant, le palier pivotant permettant le pivotement de la superstructure de la grue par rapport au socle autour de l'axe d'oscillation, dans lequel la superstructure de grue rotative comprend une flèche de grue,
- un système de levage existant conçu pour lever et abaisser une charge, le système de levage comprenant un treuil de levage entraîné par un moteur (22) et un câble de levage associé (24) ainsi qu'une ou plusieurs poulies (25) conçues pour guider le câble de levage, au moins une desdites poulies étant montée sur la flèche et le câble de levage dépendant de ladite poulie vers un connecteur de charge du système de levage, dans lequel le procédé comprend :
- la fourniture d'un système de stockage d'énergie à volant d'inertie (50) comprenant :
- un volant d'inertie (51) présentant un diamètre extérieur et un axe de rotation,
- une structure de support de volant d'inertie (53) munie d'un ou plusieurs paliers (54) qui supportent le volant d'inertie par rapport à la structure de support de volant d'inertie,
- un moteur-générateur électrique (60) couplé au volant d'inertie (51),
- le logement d'au moins le volant d'inertie (50) et d'au moins une partie de la structure de support du volant d'inertie (53) dans le socle, par exemple dans le socle existant et/ou l'extension de socle (40) qui est montée en option sur la tête (13) du socle existant, le palier pivotant existant (14) étant retiré de ladite tête (13) et un palier pivotant (14') étant ensuite monté sur une tête (42) de l'extension de socle,
- la fourniture d'un circuit électrique (70) entre le moteur-générateur (60) du système de stockage d'énergie du volant d'inertie et un moteur électrique (21) qui entraîne le treuil de levage (22).

2. Procédé selon la revendication 1, dans lequel le procédé comprend :
- le démontage du palier pivotant existant (14) de la tête (13) du socle existant, par exemple l'intégration de l'étape de levage de la superstructure de la grue par rapport au socle existant,
- la disposition d'une extension de socle (40) sur la tête du socle existant,
- le montage d'un palier pivotant (14, 14') sur une tête de l'extension de socle, par exemple ledit palier pivotant existant ou un nouveau palier pivotant,
- le logement d'au moins le volant d'inertie (51) et d'au moins une partie de la structure de support du volant d'inertie (53) dans le socle existant et/ou dans une extension de socle,
- le montage de la superstructure de grue (20) sur le palier pivotant.

3. Procédé selon la revendication 1 ou 2, dans lequel la structure de support du volant d'inertie est montée directement sur la tête du socle existant, de préférence après le retrait du palier pivotant de ladite tête, ou dans lequel la structure de support du volant d'inertie (53) est montée sur l'extension de socle qui est montée sur la tête du socle existant après le retrait du palier pivotant existant.

4. Procédé selon la revendication 1, dans lequel le procédé comprend :
- le démontage du palier pivotant existant (14) de la tête (13) du socle existant, par exemple l'intégration de 'étape de levage de la superstructure de grue par rapport au socle existant,
- la disposition d'une extension de socle (40) avec un pied sur la tête du socle existant, de façon à ce que le pied de l'extension de socle soit supportée par la tête du socle existant,
- le montage d'un palier pivotant (14, 14') sur une tête de l'extension de socle, par exemple dudit palier pivotant existant ou d'un nouveau palier pivotant,
- le logement d'au moins le volant d'inertie (51) et de la structure de support du volant d'inertie à l'intérieur de l'extension de socle, de préférence la structure de support étant montée sur l'extension de socle,
- le montage de la superstructure de la grue sur le palier pivotant.

5. Procédé selon l'une des revendications 1 à 4, dans lequel le procédé comprend :
- l'assemblage d'une extension de socle et de la structure de support du volant d'inertie supportant le volant d'inertie, afin d'obtenir un sous-ensemble,
- le démontage du palier pivotant existant de la tête du socle existant,
- le montage d'un palier pivotant sur la tête de l'extension de socle, par exemple dudit palier pivotant existant ou d'un nouveau palier pivotant,
- la disposition du sous-ensemble sur le socle existant, de façon à ce que l'extension de socle, avec un pied, soit montée sur la tête du socle existant,
- le montage de la superstructure de la grue (20) sur le palier pivotant (14').

6. Procédé selon l'une des revendications 1 à 5, dans lequel le procédé comprend :
- le montage du moteur-générateur électrique (60) du système de stockage d'énergie à volant d'inertie sur la superstructure de la grue (20) pour tourner conjointement avec la superstructure de la grue pendant le pivotement.

7. Procédé selon l'une des revendications 1 à 6, dans lequel le volant d'inertie (51) est logé de façon à ce que l'axe de rotation de celui-ci soit vertical, par exemple aligné avec l'axe de pivotement (15) de la grue montée sur socle ;
et/ou
le volant d'inertie (51) présente une masse entre 1000 et 8000 kg, par exemple actionnée à une vitesse de rotation stockant une grande quantité d'énergie, par exemple au moins 0,5 MW, par exemple au moins 1 MW.

8. Procédé selon l'une des revendications 1 à 7, dans lequel le volant d'inertie (51) est logé de façon à ce que l'axe de rotation de celui-ci soit vertical, et dans lequel le diamètre du volant d'inertie représente au moins 50 % d'un diamètre intérieur du palier pivotant (14, 14') et de préférence inférieur au diamètre intérieur du palier pivotant, par exemple le volant d'inertie présentant un diamètre entre 60 % et 90 % du diamètre intérieur du palier pivotant.

9. Procédé selon l'une des revendications 1 à 8, dans lequel le diamètre du volant d'inertie (51) est entre 3 et 7 mètres, par exemple entre 4 et 6 mètres.

10. Procédé selon l'une des revendications 1 à 9, dans lequel le moteur-générateur électrique (60) est monté sur la superstructure de la grue et dans lequel le volant d'inertie (51) et la structure de support de celui-ci sont supportés par le socle, par exemple par l'extension de socle (40) et dans lequel le procédé comprend la fourniture d'un couplage flexible (61) entre le moteur-générateur électrique d'une part et le volant d'inertie d'autre part.

11. Procédé selon l'une des revendications 1 à 10, dans lequel le moteur-générateur électrique (60) est couplé directement au volant d'inertie, de façon à ce que le moteur-générateur comprenne un rotor qui tourne à la même vitesse que le volant d'inertie (51), par exemple dans lequel le volant d'inertie est monté sur un arbre vertical qui est maintenu dans une disposition d'un ou plusieurs paliers (54), dans lequel le moteur-générateur comprend un arbre vertical aligné avec l'arbre du volant d'inertie, de préférence un couplage flexible étant prévu entre ces deux arbres.

12. Grue montée sur socle (10) qui a été modernisée avec un système de stockage d'énergie à volant d'inertie, dans lequel la grue montée sur socle comprend :
- un socle existant (11), le socle s'étendant entre un pied qui est conçu pour monter le socle existant sur une structure, par exemple une structure offshore ou la coque d'un navire, et une tête, dans lequel la tête est conçue pour monter un palier pivotant sur celle-ci,
- une superstructure de grue rotative existante (20), cette superstructure de grue rotative étant montée sur un palier pivotant (14), le palier pivotant permettant le pivotement de la superstructure de grue par rapport au socle autour d'un axe de pivotement vertical, dans lequel la superstructure de grue rotative comprend une flèche de grue,
- un système de levage existant conçu pour lever et abaisser une charge, le système de levage comprenant un treuil de levage entraîné par un moteur et un câble de levage associé (24) ainsi qu'une ou plusieurs poulies (25) conçues pour guider le câble de levage, au moins une desdites poulies étant montée sur la flèche et le câble de levage dépendant de ladite poulie à un connecteur de charge du système de levage,
dans lequel la grue montée sur socle est munie d'un système de stockage d'énergie à volant d'inertie (50) comprenant :
- un volant d'inertie (51) présentant un diamètre extérieur et un axe de rotation,
- une structure de support de volant d'énergie (53) munie d'un ou plusieurs paliers (54) qui supportent le volant d'inertie de manière rotative par rapport à la structure de support du volant d'inertie,
- un moteur-générateur électrique (60) couplé au volant d'inertie,
dans lequel au moins le volant d'inertie et au moins une partie de la structure de support du volant d'inertie sont logés dans le socle, par exemple dans le socle existant et/ou dans une extension de socle qui a été monté en option sur la tête du socle existant, un palier pivotant existant ayant été retiré de ladite tête et le palier pivotant étant alors monté sur une tête de l'extension de socle,
et dans lequel un circuit électrique (70) est prévu entre le moteur-générateur du système de stockage d'énergie à volant d'inertie et un moteur électrique (21) qui entraîne le treuil de levage (22).

13. Extension de socle (40) conçue pour être montée sur la tête (13) d'un socle (11) d'une grue montée sur socle, par exemple d'une grue montée sur un socle existant, pour une utilisation dans un procédé selon la revendication 1 ou pour la fourniture d'une grue montée sur socle selon la revendication 12, dans lequel l'extension de socle supporte, par exemple, une structure de support de volant d'inertie (53) et un volant d'inertie (51), dans lequel la structure de support de volant d'inertie est munie d'un ou plusieurs paliers (54) qui supportent le volant d'inertie de manière rotative par rapport à la structure de support du volant d'inertie.

14. Kit de pièces conçu pour moderniser une grue montée sur socle existante (10) avec un système de stockage d'énergie à volant d'inertie (50), pour une utilisation dans un procédé selon la revendication 1 ou pour la fourniture d'une grue montée sur socle selon la revendication 12, dans lequel le kit de pièces comprend :
- une extension de socle (40) selon la revendication 13
- un système de stockage d'énergie à volant d'inertie (50) comprenant :
- un volant d'inertie (51) présentant un diamètre extérieur et un axe de rotation,
- une structure de support de volant d'inertie (53) munie d'un ou plusieurs paliers (54) qui supportent le volant d'inertie de manière rotative par rapport à la structure de support du volant d'inertie,
- un moteur-générateur électrique (60) couplé au volant d'inertie,
dans lequel au moins le volant d'inertie et au moins une partie de la structure de support du volant d'inertie sont conçus pour être logés dans le socle et/ou dans une extension de socle, par exemple au moins le volant d'inertie entièrement à l'intérieur de l'extension de socle.

15. Structure offshore ou navire muni d'une grue montée sur socle modernisée conformément au procédé selon l'une des revendications 1 à 11 ou muni d'une grue montée sur socle selon la revendication 12.
